# FASCICULE DE BREVET EUROPEEN

(11) **EP 0 404 657 B1**
(45) Date de publication et mention de la délivrance du brevet: **13.10.1993**
(21) Numéro de dépôt: 90401710.0
(22) Date de dépôt: 19.06.1990
(51) Int. Cl.: G01P 13/04

(54) **Dispositif de détermination du sens de déplacement d'un objet mobile**
Vorrichtung zur Bestimmung der Bewegungsrichtung eines bewegbaren Gegenstandes
Apparatus to determine the sense of movement of a mobile object

(30) Priorité: 20.06.1989 FR 8908172
(43) Date de publication de la demande: 27.12.1990
(73) Titulaire: CROUZET Electroménager, F-26000 Valence (FR)
(72) Inventeur: Vollot, Jean, F-07800 Saint Georges Les Bains (FR)
(74) Mandataire: Bloch, Gérard

(56) Documents cités:
- EP-A- 0 071 501
- EP-A- 0 216 556
- DE-A- 1 498 191
- US-A- 3 614 492

## Description

La présente invention a pour objet un dispositif de détermination du sens de déplacement d'un objet mobile en rotation ou en translation.

Un tel dispositif est susceptible de nombreuses applications, notamment dans le domaine des programmateurs pour appareils électroménagers qui comprennent un bloc de cames monté mobile pour actionner des leviers d'ouverture ou de fermeture de contacts électriques. Dans un tel programmateur, un dispositif du type défini ci-dessus est par exemple utile pour déterminer le sens d'entraînement du bloc de cames, sens inconnu lorsque ce bloc est entraîné par l'utilisateur de l'appareil, ou par un moteur dont le sens de démarrage est sujet à aléas.

On connaît déjà un dispositif de détermination du sens de rotation d'un bloc de cames, comprenant deux cames solidaires du bloc, chacune d'entre elles comportant un grand nombre de dents d'actionnement d'un levier de fermeture d'un contact normalement ouvert. Les deux cames sont montées de façon à ce que leurs dentures respectives soient légèrement décalées l'une par rapport à l'autre. Un plot de chaque contact est réuni à une tension fixe, l'autre étant relié à chacune des deux entrées d'un circuit électronique sensible au décalage, dans le temps, des signaux qui lui sont appliqués, décalage qui dépend du sens de rotation des cames.

Un tel dispositif est relativement complexe, donc d'un prix de revient élevé, et d'une fiabilité qui laisse parfois à désirer. De plus il est encombrant. Enfin, l'information relative au sens de déplacement du bloc de cames est disponible sous la forme d'un signal électrique. Ceci oblige à utiliser un relais lorsque l'on désire ouvrir une connexion électrique, par exemple lorsque le bloc est entraîné dans un sens, et la fermer lorsque le bloc est entraîné dans l'autre sens. Or les relais sont également des composants d'un prix de revient relativement élevé, et dont la fiabilité n'est pas parfaite.

Le brevet européen No.0 071 501 décrit un dispositif dans lequel l'information utile est fournie par une pièce mobile, et donc susceptible d'actionner directement un contact, sans faire appel à un relais. La pièce mobile de ce dispositif connu est une couronne entraînée en rotation pour l'objet mobile, en l'occurrence un arbre rotatif traversant la couronne, grâce au coincement de l'un de deux galets disposés entre l'arbre et la couronne. La plage d'entraînement de la couronne est limitée par l'arrivée de celle-ci dans une position où les sollicitations antagonistes des deux galets sur la couronne s'équilibrent. Ce dispositif mettant en oeuvre des galets qui se coincent pour entraîner la pièce mobile, et qui frottent sur celle-ci lorsqu'elle est immobile, est relativement complexe, et implique un usinage précis des pièces, et un choix judicieux des matériaux, pour parvenir à une fiabilité satisfaisante.

Or, lorsqu'il s'agit de matériels de grande diffusion comme les appareils électroménagers, les questions de prix de revient, de fiabilité et d'encombrement sont primordiales.

La présente invention vise à pallier les inconvénients précédents, en procurant un dispositif de détermination du sens d'entraînemenmt dans lequel, comme dans celui décrit dans le brevet européen déjà cité, l'information utile est fournie par une pièce mobile, et qui soit simple, robuste, fiable et peu encombrant.

A cet effet, la présente invention a pour objet un dispositif du type défini ci-dessus, caractérisé par le fait qu'il comprend :
- une pièce mobile en rotation ou en translation sur une première plage de positions limitée par deux butées, et accouplée par frottement audit objet, et,
- des moyens indicateurs de celle des deux butées contre laquelle vient en contact ladite pièce mobile lorsque ledit objet se déplace.

Le dispositif de l'invention met principalement en oeuvre des éléments mécaniques simples qui lui confèrent un prix de revient faible, une bonne robustesse, et un encombrement réduit.

Avantageusement, ladite pièce mobile est pourvue de moyens d'accouplement avec ledit objet, actifs sur une deuxième plage de positions de ladite pièce mobile, ladite deuxième plage étant inférieure à ladite première plage et occupant sa partie centrale, de façon à ce qu'après un changement du sens de déplacement dudit objet, ladite pièce mobile soit entraînée par ledit objet, d'abord sous l'effet du seul frottement, puis de façon positive sous l'effet desdits moyens d'accouplement, et à nouveau sous l'effet du seul frottement.

Dans ce cas, le fonctionnement est particulièrement fiable, car sur la majeure partie de sa course, la pièce mobile est entraînée de façon positive par l'objet en déplacement, grâce aux moyens d'accouplement, le frottement étant utilisé uniquement en début et en fin de course, en début de course pour rendre actifs les moyens d'accouplement, et en fin de course pour cesser de les rendre actifs, afin d'autoriser le déplacement de l'objet alors que la pièce mobile est en butée.

Avantageusement encore, ladite pièce mobile est accouplée mécaniquement avec un jeu à une pièce de commande desdits moyens indicateurs, de façon à ce que, lorsque ladite pièce mobile est entraînée par ledit objet sous l'effet du seul frottement immédiatement après un changement de sens dudit objet, ladite pièce de commande reste immobile.

Dans ce cas, il est possible que la pièce de commande ait un effort important à fournir lorsque la pièce mobile passe d'une extrémité à l'autre de sa course, par exemple pour actionner un commutateur, sans risque d'immobilisation. En effet, du fait du jeu entre la pièce mobile et la pièce de commande, l'effort à fournir par la pièce de commande est reporté sur la pièce mobile lorsque celle-ci est entraînée de façon positive par les moyens d'accouplement, et non lorsque celle-ci est entraînée sous l'effet du seul frottement. Il en résulte que la fonction du frottement est limitée à un petit déplacement de la pièce mobile seule.

Comme celle-ci est en général de petite taille et d'un poids négligeable, le frottement produira toujours l'effet attendu, même après de nombreuses heures de fonctionnement et l'usure résultante. Ainsi, même si l'effort à fournir pour commander les moyens indicateurs est important, le fonctionnement du dispositif de l'invention est parfaitement fiable et stable dans le temps.

Avantageusement encore, ledit objet est pourvu d'une denture avec laquelle coopère un pignon denté monté rotatif autour d'un axe, ladite pièce mobile est montée pivotante autour du même axe, et il est prévu, sur ledit pignon denté une couronne qui coopère par frottement avec une partie cylindrique prévue sur ladite pièce mobile, ou inversement, et il est prévu des moyens de rappel élastique de ladite couronne contre ladite partie cylindrique.

Une telle forme de réalisation assure une bonne stabilité du frottement dans le temps.

Avantageusement encore, lesdits moyens d'accouplement comprennent une dent prévue pour coopérer avec ladite denture dudit objet.

Une telle forme de réalisation est particulièrement simple.

Avantageusement encore, lesdits moyens indicateurs comprennent un levier ouvrant et fermant un commutateur électrique, ladite pièce de commande est une came qui déplace ledit levier et le dispositif est utilisé dans un programmateur pour appareil de type électroménager, dans lequel le commutateur autorise l'alimentation en énergie électrique des principaux organes dudit appareil.

La présente invention sera mieux comprise à la lecture de la description suivante de la forme de réalisation préférée du dispositif de l'invention, faite en se référant aux dessins annexés, sur lesquels :
- la figure 1 représente un programmateur pour appareil électroménager pourvu du dispositif de l'invention, pour déterminer le sens de déplacement du bloc de cames,
- la figure 2 représente une vue éclatée en perspective du dispositif de détermination du sens de déplacement utilisé dans le programmateur de la figure 1, et,
- les figures 3a, 3b et 3c sont des vues de faces du dispositif de la figure 2, représenté dans trois positions différentes.

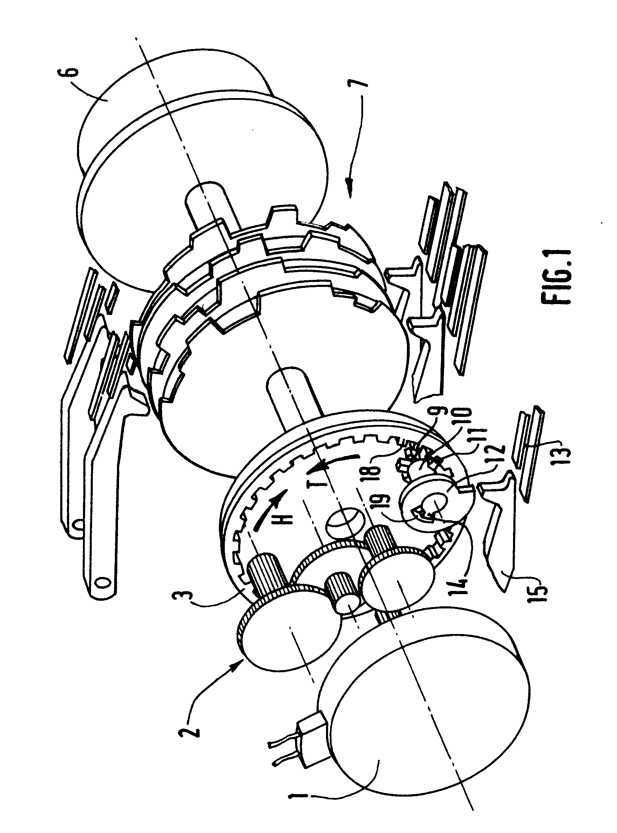

En se référant à la figure 1, un programmateur pour appareil électroménager, par exemple pour une machine à laver le linge ou la vaisselle, comprend un bloc de cames 7, destiné à actionner sélectivement des leviers d'ouverture et de fermeture de contacts d'alimentation des différents organes de l'appareil. Le bloc de cames 7 est susceptible d'être entraîné en rotation soit par l'intermédiaire d'un bouton 6 manoeuvré par l'utilisateur au moment où il sélectionne un des programmes possibles, soit par l'intermédiaire d'un réducteur 2 entraîné lui-même par un moteur 1, pour faire se dérouler un programme particulier de fonctionnement de l'appareil.

Dans un cas comme dans l'autre, il est utile de déterminer le sens de rotation du bloc de cames 7. En effet, à l'heure actuelle, les programmateurs ne sont plus nécessairement du type très simple où le déroulement de chaque programme est mémorisé sur un secteur du bloc de cames, et où l'utilisateur, pour sélectionner un programme, amène le bloc de cames dans une position correspondant au début du déroulement du programme choisi, position à partir de laquelle le bloc est entraîné, toujours dans le même sens par le moteur 1.

Aujourd'hui, les programmateurs sont souvent du type dit "hybride", c'est-à-dire pour lesquels un certain nombre de fonctions sont commandées de façon traditionnelle, d'autres étant commandées de façon électronique. Par ailleurs, afin d'obtenir des programmateurs offrant une plus grande souplesse d'emploi, on peut utiliser, pour les entraîner, des moteurs susceptibles de tourner dans un sens ou dans l'autre. Enfin, dans le but de n'imposer aucune contrainte à l'utilisateur, on peut souhaiter lui laisser la possibilité de tourner le bouton 6 dans un sens ou dans l'autre. Tous ces perfectionnements rendent nécessaire une détermination permanente du sens de rotation du bloc de cames des programmateurs, par exemple en vue de connaître en permanence sa position. Dans ce cas, on prévoit un dispositif de détermination de l'amplitude des déplacements du bloc de cames, par exemple par comptage du nombre de pas élémentaires franchis, et un circuit électronique qui mémorise l'amplitude et le sens des déplacements à partir d'une position de référence déterminée, et qui est donc en mesure de déterminer à tout instant la position du bloc de cames.

Le rôle du dispositif de l'invention qui va maintenant être décrit est donc de déterminer le sens de rotation du bloc 7 dans le programmateur de la figure 1.

Ici, le réducteur 2 entraîne le bloc 7 par l'intermédiaire d'une denture 18 prévue sur une couronne 3 ménagée sur un disque solidaire du bloc 7. Un pignon denté 9, monté rotatif autour d'un axe parallèle à l'axe du bloc de cames 7 coopère avec la denture 18 et se trouve donc en permanence entraîné par la couronne 3.

Une pièce mobile 10 est montée pivotante sur le même axe que le pignon denté 9, avec laquelle elle coopère par frottement, d'une façon qui sera mieux comprise dans la suite. La pièce mobile 10 comporte une unique dent 11 susceptible de coopérer avec la denture 18, et elle est couplée avec un jeu à une came 12 de commande d'un levier 15 qui ouvre et ferme un commutateur électrique 13 dont seule les lames souples portant les plots sont apparentes sur la figure 1. Le jeu entre la pièce mobile 10 et la came 12 est obtenu par un ergot radial 14 solidaire que la pièce mobile 10 qui est engagé dans un évidement 19, en forme de secteur angulaire notablement plus large que l'ergot radial 14, évidement 19 pratiqué dans la came 12.

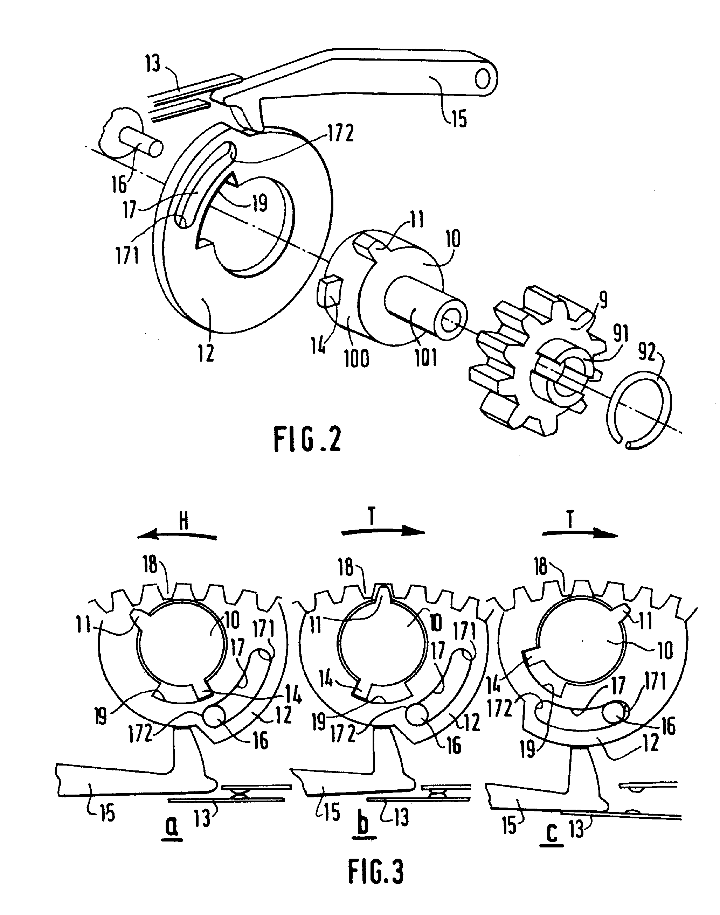

De façon non représentée sur la figure 1 de façon à ne pas l'alourdir, mais qui apparaît sur la figure 2, il est prévu un ergot fixe 16 qui coopère avec un autre évidement 17 pratiqué dans la came 12 de façon à limiter l'amplitude du déplacement de la came 12. Dans une position extrême de la came 12, l'ergot 16 coopère avec l'extrémité 171 de l'évidement 17 qui sert donc de butée, alors que dans l'autre position extrême de la came 12, l'ergot 16 coopère avec l'extrémité 172 qui sert de butée opposée. Il en résulte, par le couplage entre la came 12 et la pièce mobile 10 que celle-ci est mobile sur une plage de positions limitée, ici de manière indirecte, par les deux butées 171 et 172. La figure 3a montre une des positions extrêmes de la pièce mobile 10, position extrême dans laquelle l'ergot radial 14 est en butée contre une extrémité de l'évidement 19, et l'ergot 16 coopère avec la butée 172. La figure 3c montre l'autre position extrême de la pièce mobile 10, position extrême dans laquelle l'ergot radial 14 est en butée contre l'autre extrémité de l'évidement 19, et l'ergot 16 coopère avec la butée 171. On peut donc considérer que la pièce mobile 10 peut occuper une plage de positions limitée par deux butées.

Sur la figure 2, il apparaît que la pièce mobile 10 comprend deux parties cylindriques de diamètres différents. Une première partie 100, ayant le plus grand diamètre, porte d'un côté l'ergot radial 14, et de l'autre la dent 11. Une deuxième partie 101, ayant le plus faible diamètre, prolonge la partie 100 du côté de la dent 11, et sert d'arbre au pignon denté 9. La partie cylindrique 101 a une dimension axiale supérieure à celle du pignon denté 9, de façon à ce que, lorsque celui-ci est monté sur la partie cylindrique 101, celle-ci fasse saillie hors du corps du pignon denté 9. Ce dernier est pourvu d'une couronne 91 comprenant deux ailes, rappellées de façon élastique par un anneau 92 contre la partie cylindrique 101 en saillie, de façon à assurer un frottement entre la couronne 91 et la partie 101 saillante, c'est-à-dire entre le pignon 9 et la pièce mobile 10, frottement qui reste ainsi relativement stable dans le temps.

Le diamètre de la partie cylindrique 100 est égal au diamètre intérieur de la denture du pignon 9, et la dent 11 est de forme sensiblement identique à celle des dents de la denture du pignon 9. De plus, l'ensemble est monté contre la couronne 3 de façon à ce que la dent 11 et le pignon 9 puissent coopérer en même temps avec la denture 18.

Comme cela apparaît sur les figures 3, la dent 11 permet l'accouplement de la denture 18 et de la pièce mobile 10, cet accouplement étant actif sur une plage limitée de positions de la pièce mobile 10, plage évidemment inférieure à celle qui a été définie et dont les extrémités correspondent aux figures 3a et 3c, mais occupant la partie centrale de cette plage. En effet, sur les figures 3a et 3c, la dent 11 ne coopère pas avec la denture 18, tandis que sur la figure 3b, qui représente une position intermédiaire, la dent 11 est enclenchée dans la denture 18.

Le dispositif qui vient d'être décrit fonctionne comme suit, en référence principalement aux figures 3.

En supposant que le dispositif se trouve dans la position décrite à propos de la figure 3a et que le bloc 7 soit entraîné dans un sens tel que la denture 18 se déplace dans le sens marqué H, il apparaît que le dispositif ne change pas de position, puisque la pièce mobile 10 étant couplée par le seul frottement au pignon 9, non représenté dans un souci de simplicité, la pièce mobile 10 sera poussée, sous l'action du frottement, contre la butée avec laquelle elle est déjà en contact. Dans la situation de la figure 3a, le commutateur 13 reste fermé.

On suppose maintenant que le sens de rotation du bloc 7 est inversé et devient le sens marqué T de la figure 3b. Alors, immédiatement après ce changement de sens, la pièce mobile 10 se trouve entraînée sous l'action du seul frottement avec le pignon 9, dans le même sens, ce qui a pour effet de rapprocher la dent 11 de la denture 18, et d'engager cette dent 11 dans le premier creux de la denture 18 qui se présente à elle. Pendant ce déplacement sous l'action du seul frottement, l'ergot radial 14 se déplace dans l'évidement 19 sans entraîner la came 12 qui reste immobile, donc sans effort à fournir, ce qui fait que le déplacement de la pièce mobile 10 sous l'effet du seul frottement se produit à coup sûr.

Ensuite, le dispositif se trouve dans la situation de la figure 3b, la dent 11 étant engagée dans la denture 18, il se produit un entraînement positif de la pièce mobile 10 par la denture 18, et, le jeu avec la came 12 ayant été juste parcouru, il va se produire un entraînement positif de la came 12 qui ici, va ouvrir le contact 13. On note que, quel que soit l'effort à fournir pour ouvrir ce contact, cette ouverture aura lieu, de par l'entraînement positif de la came 12 par la pièce 10, elle-même entraînée de façon positive par la denture 18, grâce à la dent 11.

Le dispositif arrive alors dans la position décrite en référence à la figure 3c, la dernière partie du déplacement de la pièce mobile 10 et de la came 12 étant à nouveau effectuée sous l'action du seul frottement, ce qui ne pose pas de problème, dans la mesure où il n'y a plus d'effort à fournir pour manoeuvrer le contact 13.

La position de la figure 3c est symétrique de celle de la figure 3a et si un changement de sens se produit dans la situation de la figure 3c, les phénomènes qui viennent d'être décrits se produiront en sens inverse.

Ici, on peut considérer que le levier 15 et le commutateur électrique 13 indiquent celle des deux butées contre laquelle vient en contact la pièce mobile 10 lorsque le disque portant la couronne 3 se déplace.

Si le dispositif de l'invention est utilisé dans un programmateur pour lequel un sens de rotation est dédié au déroulement des programmes, et l'autre est dédié aux remises en position initiale du programmateur, il peut être avantageux que le commutateur 13 soit le commutateur dit "général" qui autorise l'alimentation en énergie électrique des principaux organes de l'appareil. Ainsi, lors des remises en position initiale du programmateur, et sans qu'il soit nécessaire d'utiliser un relais, on est assuré que ces organes ne sont pas alimentés, ce qui évite leur mise en marche fugitive, ou des claquements intempestifs pendant les déplacements du bloc de came ne correspondant pas au déroulement d'un programme.

Dans la description qui vient d'être faite, le frottement est obtenu par friction de la couronne 91, solidaire du pignon 9 sur la partie cylindrique 101, solidaire de la pièce mobile 10. On pourrait naturellement faire l'inverse et prévoir une couronne sur la pièce mobile et une partie cylindrique sur le pignon, ou encore prévoir tout autre type de couplage par frottement.

De même, le pignon 9 n'est pas nécessaire dans toutes les situations, et il est clair que comme ce pignon est solidaire de tous les déplacements de la couronne 3, tout se passe comme si la pièce mobile était couplée par frottement à la couronne elle-même.

Par ailleurs, il est à la portée de l'homme du métier de prévoir, pour la dent 1 et la denture 12, des profils qui évitent tout phénomène d'arc-boutement de la dent 11 contre une dent de la denture 18 au moment où elle devrait s'engager dans un creux de cette même denture.

Naturellement, la portée de la présente demande n'est pas limitée à la description qui vient d'être faite, ni l'application du dispositif de l'invention aux programmateurs pour appareils électroménagers. D'une manière générale, le dispositif de l'invention peut être utilisé pour déterminer le sens de déplacement de tout objet susceptible de se déplacer dans un sens, ou dans l'autre. Ainsi, la description qui précède concerne un objet mobile en rotation, mais l'homme du métier est à même de transposer le dispositif de l'invention pour un objet mobile en translation.

De même, le dispositif peut prendre de nombreuses formes. A titre d'exemple, entre les figures 1 à 3 et tout en restant dans le cadre limité de déplacements en rotation, on a volontairement fait varier la forme et la position de la came 12 et du levier 15.

Naturellement, il n'est pas nécessaire que l'indication du sens de déplacement de l'objet mette en jeu un ou plusieurs contacts électriques, et dans certains cas simples, un simple repère visuel permettant d'identifier la position dans laquelle se trouve la pièce mobile 10 peut être suffisant.

## Revendications

1. Dispositif de détermination du sens de déplacement d'un objet (3) mobile en rotation ou en translation caractérisé par le fait qu'il comprend :
- une pièce mobile (10) en rotation ou en translation sur une première plage de positions limitée par deux butées (171,172), et accouplée par frottement audit objet (3), et,
- des moyens indicateurs (13,15) de celle des deux butées contre laquelle vient en contact ladite pièce mobile (10) lorsque ledit objet (3) se déplace.

2. Dispositif selon la revendication 1, dans lequel ladite pièce mobile (10) est pourvue de moyens d'accouplement (11) avec ledit objet (3), actifs sur une deuxième plage de positions de ladite pièce mobile (10), ladite deuxième plage étant inférieure à ladite première plage et occupant sa partie centrale, de façon à ce qu'après un changement du sens de déplacement dudit objet (3), ladite pièce mobile (10) soit entraînée par ledit objet (3), d'abord sous l'effet du seul frottement, puis de façon positive sous l'effet desdits moyens d'accouplement (11), et enfin à nouveau sous l'effet du seul frottement.

3. Dispositif selon la revendication 2, dans lequel ladite pièce mobile (10) est accouplée mécaniquement avec un jeu à une pièce de commande (12) desdits moyens indicateurs (13,15), de façon à ce que, lorsque ladite pièce mobile (10) est entraînée par ledit objet (3) sous l'effet du seul frottement immédiatement après un changement de sens dudit objet (3), ladite pièce de commande (12) reste immobile.

4. Dispositif selon l'une des revendications 2 ou 3, dans lequel ledit objet (3) est pourvu d'une denture (18) avec laquelle coopère un pignon denté (9) monté rotatif autour d'un axe, ladite pièce mobile (10) est montée pivotante autour du même axe, et il est prévu, sur ledit pignon denté (9), une couronne (91) qui coopère par frottement avec une partie cylindrique (101) prévue sur ladite pièce mobile (10), ou inversement, et il est prévu des moyens (92) de rappel élastique de ladite couronne (91) contre ladite partie cylindrique (101).

5. Dispositif selon la revendication 4, dans lequel lesdits moyens d'accouplement comprennent une dent (11) prévue pour coopérer avec ladite denture (18) dudit objet (3).

6. Dispositif selon l'une des revendications 3 à 5, dans lequel lesdits moyens indicateurs (13,15) comprennent un levier (15) ouvrant et fermant un commutateur (13) électrique, et ladite pièce de commande est une came (12) qui déplace ledit levier (15).

7. Dispositif selon la revendication 6, utilisé dans un programmateur pour appareil de type électroménager, dans lequel le commutateur (13) autorise l'alimentation en énergie électrique des principaux organes dudit appareil.

## Patentansprüche

1. Vorrichtung zur Bestimmung der Bewegungsrichtung eines in Drehung oder in Translation beweglichen Gegenstandes (3), dadurch gekennzeichnet, daß sie umfaßt:
- ein in einem ersten, durch zwei Anschläge (171, 172) begrenzten Positionsbereich in Drehung oder in Translation bewegliches Teil (10), das durch Reibung an den besagten Gegenstand (3) gekuppelt ist, und
- Mittel zum Anzeigen (13, 15) jenes der beiden Anschläge, den das besagte bewegliche Teil (10) berühren wird, wenn sich der besagte Gegenstand (3) bewegt.

2. Vorrichtung gemäß Anspruch 1, bei welcher das besagte bewegliche Teil (10) mit Mitteln zum Kuppeln (11) an den besagten Gegenstand (3) versehen ist, die auf einen zweiten Positionsbereich des besagten beweglichen Teiles (10) wirken, wobei der besagte zweite Bereich kleiner als der besagte erste Bereich ist und seinen Mittelteil belegt, sodaß nach einer Änderung der Bewegungsrichtung des besagten Gegenstandes (3) das besagte bewegliche Teile (10) von dem besagten Gegenstand (3) in Bewegung gebracht wird, zuerst nur unter Einwirkung von Reibung, dann in positiver Weise unter Einwirkung der besagten Kupplungsmittel (11) und schließlich erneut nur unter der Einwirkung von Reibung.

3. Vorrichtung gemäß Anspruch 2, bei welcher das besagte bewegliche Teil (10) mechanisch mit einem Antriebssatz mit einem Steuerteil (12) für die besagten Anzeigemittel (13, 15) gekuppelt ist, sodaß, wenn das besagte bewegliche Teil (10) von dem besagten Gegenstand (3) nur unter Einwirkung von Reibung unmittelbar nach einer Richtungsänderung des besagten Gegenstandes (3) in Bewegung gebracht wird, der besagte Steuerteil (12) unbeweglich bleibt.

4. Vorrichtung gemäß einem der Ansprüche 2 oder 3, bei welcher der besagte Gegenstand (3) mit einer Verzahnung (18) versehen ist, mit welcher ein drehbar um eine Achse angeordnetes Zahnritzel (9) zusammenwirkt, wobei das besagte bewegliche Teil (10) schwenkbar um dieselbe Achse angeordnet ist, und wo auf dem besagten Zahnritzel (9) ein Kranz (91) vorgesehen ist, welcher durch Reibung mit einem auf dem besagten beweglichen Teil (10) vorgesehenen zylindrischen Teil (101) zusammenwirkt, oder umgekehrt, und wo Mittel (92) zur elastischen Rückstellung des besagten Kranzes (91) an den zylindrischen Teil (101) vorgesehen sind.

5. Vorrichtung gemäß Anspruch 4, bei welcher die besagten Kupplungsmittel einen Zahn (11) umfassen, welcher mit der besagten Verzahnung (18) des besagten Gegenstandes (3) zusammenwirkt.

6. Vorrichtung gemäß einem der Ansprüche 3 - 5, bei welcher die besagten Anzeigemittel (13, 15) einen Hebel (15) zum Öffnen und Schließen eines elektrischen Schalters (13) umfassen und wobei das besagte Steuerteil eine Nocke (12) ist, welche den besagten Hebel (15) verschiebt.

7. Vorrichtung gemäß Anspruch 6 zur Verwendung in einem Programmschaltwerk für Haushaltsgeräte, bei welcher der Schalter (13) die Versorgung der Hauptteile des genannten Gerätes mit elektrischer Energie ermöglicht.

## Claims

1. Device for determining the direction of movement of an object (3) moving by rotation or translation, characterised by the fact that it comprises:
- a member (10) moving by rotation or translation on a first area of positions limited by two stops (171, 172) and connected by friction to said object (3), and
- means (13, 15) for indicating that of the two stops against which said movable member (10) comes into contact when said object (3) moves.

2. Device according to Claim 1, in which said movable member (10) is provided with means (11) for connection to said object (3), which are active on a second area of positions of said movable member (10), said second area being smaller than said first area and occupying its central part, in order that after a change of the direction of movement of said object (3), said movable member (10) is entrained by said object (3), firt of all solely under the effect of friction, then in a positive manner under the effect of said connection means (11) and finally once again solely under the effect of friction.

3. Device according to Claim 2, in which said movable member (10) is connected mechanically with clearance to a member (12) for controlling said indicator means (13, 15) in order that, when said movable member (10) is entrained by said object (3) solely under the effect of friction immediately after a change of direction of said object (3), said control member (12) remains stationary.

4. Device according to one of Claims 2 or 3, in which said object (3) is provided with toothing (18) with which cooperates a toothed pinion (9) mounted to rotate about an axis, said movable member (10) is mounted to pivot about the same axis and provided on said toothed pinion (9) is a ring (91) which cooperates by friction with a cylindrical part (101) provided on said movable member (10), or vice versa, and means (92) are provided for the resilient return of said ring (91) against said cylindrical part (101).

5. Device according to Claim 4, in which said connection means comprise a tooth (11) provided for cooperating with said toothing (18) of said object (3).

6. Device according to one of Claims 3 to 5, in which said indicator means (13, 15) comprise a lever (15) opening and closing an electric switch (13) and said control member is a cam (12) which moves said lever (15).

7. Device according to Claim 6, used in a programmer for an appliance of the domestic electrical type, in which the switch (13) allows the supply of electrical power to the main components of said appliance.
